# EUROPÄISCHE PATENTSCHRIFT

(11) **EP 1 268 284 B1**
(45) Veröffentlichungstag und Bekanntmachung des Hinweises auf die Patenterteilung: **30.06.2004**
(21) Anmeldenummer: 01931505.0
(22) Anmeldetag: 09.03.2001
(51) Int. Cl.: B65D 1/02

(54) **BEHÄLTER MIT STRUKTURIERTEN FLÜSSIGKEITSABWEISENDEN UND FLÜSSIGKEITSBENETZENDEN TEILBEREICHEN DER INNEREN OBERFLÄCHE**
CONTAINER WITH STRUCTURED FLUID REPELLENT AND FLUID WETTABLE PARTIAL REGIONS OF THE INNER SURFACES
CONTENANTS DONT LA SURFACE INTERIEURE PRESENTE DES PARTIES MOUILLABLES ET DES PARTIES DEPERLANTES STRUCTUREES

(30) Priorität: 31.03.2000 DE 20006010 U
(43) Veröffentlichungstag der Anmeldung: 02.01.2003
(73) Patentinhaber: Creavis Gesellschaft für Technologie und Innovation mbH, 45772 Marl (DE)
(72) Erfinder: OLES, Markus, 45525 Hattingen (DE); HOMMES, Peter, 97299 Zell am Main (DE); OTTERSBACH, Peter, 51570 Windeck (DE)
(86) Internationale Anmeldenummer: PCT/EP2001/002664
(87) Internationale Veröffentlichungsnummer: WO 2001/074672

(56) Entgegenhaltungen:
- EP-A- 0 933 388
- DE-C- 19 913 601
- US-A- 5 265 770

## Beschreibung

Die vorliegende Erfindung betrifft Behälter mit Innenflächen, die flüssigkeitsabweisende Teilbereiche einer mittleren bis geringen Oberflächenenergie und flüssigkeitsbenetzende Teilbereiche aufweisen.

Gegenstände mit flüssigkeitsabweisende d. h. schwer benetzbaren Oberflächen weisen eine Reihe von interessanten und wirtschaftlich wichtigen Merkmalen auf. So sind sie leicht zu reinigen und bieten Rückständen und Flüssigkeiten wenig Halt.

Der Einsatz von hydrophoben Materialien wie perfluorierten Polymeren zur Herstellung von hydrophoben Oberflächen ist bekannt; eine Weiterentwicklung dieser Oberflächen besteht darin, die Oberflächen im µm bis nm-Bereich zu strukturieren. Hierdurch lassen sich Fortschreitwinkel von bis zu 150-160° realisieren. Es wird eine deutlich stärkere Tropfenbildung beobachtet und im Unterschied zu glatten Oberflächen können Tropfen auf wenig geneigten Oberflächen leicht abrollen.

US-PS 55 99 489 offenbart ein Verfahren, bei dem eine Oberfläche durch Beschuß mit Partikeln einer entsprechenden Größe und anschließender Perfluorierung besonders wasserabweisend ausgestattet werden kann.

Ein anderes Verfahren beschreiben H. Saito et al. in Surface Coating International 4, 1997, S. 168 ff. Hier werden Partikel aus Fluorpolymeren auf Metalloberflächen aufgebracht, wobei eine stark erniedrigte Benetzbarkeit der so erzeugten Oberflächen gegenüber Wasser und eine erheblich reduzierte Vereisungsneigung festgestellt wurde.

In US-PS 33 54 022 und WO 96/04123 sind weitere Verfahren zur Erniedrigung der Benetzbarkeit von Gegenständen durch topologische Veränderungen der Oberflächen beschrieben. Hier werden künstliche Erhebungen bzw. Vertiefungen mit einer Höhe von ca. 5 bis 1000 µm und einem Abstand von ca. 5 bis 500 µm auf hydrophobe oder nach der Strukturierung hydrophobierte Werkstoffe aufgebracht. Oberflächen dieser Art führen zu einer schnellen Tropfenbildung, wobei die abrollenden Tropfen Schmutzteilchen aufnehmen und somit die Oberfläche reinigen. Angaben über ein Aspektverhältnis der Erhebungen sind nicht vorhanden.

Die oben vorgestellten Verfahren ermöglichen die Herstellung von vollständig und lückenlos flüssigkeits- und/oder schmutzabweisenden Oberflächen. Dies ist aber häufig nicht erwünscht, sondern es besteht der Wunsch, Oberflächen, die flüssigkeitsabweisende und flüssigkeitsbenetzende Bereiche aufweisen, herzustellen. Oberflächen mit solch einer "intelligenten" Struktur werden z.B. in WO 94/27719 beschrieben. Hier wird ein Verfahren zur Herstellung von hydrophoben Oberflächen mit hydrophilen und funktionalisierten Bereichen offenbart, wobei diese Bereiche strahlenchemisch hydrophiliert und anschließend naßchemisch funktionalisiert werden. Oberflächen dieser Art besitzen bis zu 10.000 funktionalisierte Bereiche pro cm² und werden in der biologischen Analytik, speziell in der DNA-Sequenzierung, eingesetzt. Die auf den funktionalisierten Bereichen adhärierten Flüssigkeitsmengen sind mit 50 pl bis 2 µl sehr klein und können daher nur noch von einem Automaten aufgetragen werden.

Die chemische Hydrophilierung mit anschließender Funktionalisierung reicht für ein ortsdefiniertes Aufteilen von Flüssigkeiten oft nicht aus; erwünscht wären Oberflächen mit einem sehr großen Unterschied im Adhäsionsverhalten bzw. im Kontaktwinkel von flüssigkeitsabweisenden und flüssigkeitsbenetzenden Bereichen.

Dies gilt insbesondere dann, wenn aufgebrachte Lösungen eingeengt werden sollen, und das dabei entstehende Konzentrat bzw. die gelöste Substanz sich weiterhin an einem definierten Ort befinden soll.
Oberflächen mit strukturierten und nichtstrukturierten Teilbereichen sind bekannt und z. B. in DE 199 14 007 (Offenlegungstag : 31. März 2000) und DE 198 03 787 beschrieben.

Aus einem anderen technischen Gebiet, der biologisch/pharmazeutischen Industrie ist das Problem der Verpackung von biologischen oder pharmazeutischen Produkten - meist in Lösung- und der vollständigen, unverdünnten Entnahme dieser Lösungen aus den Verpackungen bekannt. Typische Verpackungen sind Ampullen aus Kunststoff mit oder ohne Verschluß.
Hochwertige biologische oder pharmazeutische Produkte werden häufig in sehr kleinen Mengen verpackt. Dies liegt zum einen an der hohen Wirksamkeit dieser Präparate und zum anderen am sehr hohen Preis dieser Substanzen. Volumina von weniger als 100 µl sind hierbei keine Ausnahme. Wenn diese Produkte in wäßriger Lösung ausgeliefert werden, benetzen die Oberflächen der Behälter mit dieser Lösung und eine rückstandsfreie/vollständige Entnahme des Produktes ist nicht bzw. nur sehr schwer möglich. Die stellt häufig einen hohen wirtschaftlichen Schaden dar.

Der vorliegenden Erfindung lag daher die Aufgabe zugrunde, Behälter zu entwickeln, die die Ansammlung von Flüssigkeiten an einer Stelle des Behälters und damit eine vollständige Entnahme dieser Flüssigkeiten ermöglichen.

Es wurde gefunden, daß Flüssigkeiten in Behältern mit Innenflächen mit Teilbereichen aus strukturierten Oberflächen durch Erhebungen einer bestimmen Höhe und Abstand sowie einer Oberflächenenergie des unstrukturierten Materials von weniger als 35 mN/m und flüssigkeitsbenetzenden Teilbereichen sich schnell und vollständig in den flüssigkeitsbenetzenden Teilbereichen sammeln.

Gegenstand der vorliegenden Erfindung sind daher Behälter mit flüssigkeitsabweisenden und flüssigkeitsbenetzenden Teilbereichen der inneren Oberfläche, wobei
a) die flüssigkeitsabweisenden Teilbereiche durch Erhebungen mit einer mittleren Höhe von 50 m bis 10 µm und einem mittleren Abstand von 50 nm bis 10 µm strukturiert sind und eine Oberflächenenergie des unstrukturierten Materials von weniger als 35 mN/m aufweisen und
b) die flüssigkeitsbenetzenden Teilbereiche keine Erhebungen aufweisen.

Die flüssigkeitsbenetzenden Teilbereiche der Behälter ohne Erhebungen sind flache Flächen ohne die Erhebungen der flüssigkeitsabweisenden, strukturierten Teilbereiche. Sie können durchaus kleine Strukturen aufweisen, die jedoch nicht die Abmessungen der Erhebungen, wie in den Schutzansprüchen definiert, aufweisen. Sollten die Teilbereiche ohne Erhebungen kleine Strukturierungen besitzen, so erreichen diese höchstens 10 % der Höhe der Erhebungen der strukturierten Oberfläche. Die Teilbereiche ohne Erhebungen oder "flachen Teilbereiche" konnen jedoch, wie noch gezeigt werden wird, auf gröberen Überstrukturen liegen.

Zur Herstellung der erfindungsgemäßen Behälter können die Oberflächen der Behälter für die flussigkeitsabweisenden Teilbereiche mit einer Oberflächenenergie von weniger als 35 mN/m mechanisch oder lithographisch mit Erhebungen versehen werden und anschließend Teilbereiche der so erhaltenen strukturierten Oberfläche flüssigkeitsbenetzend beschichtet werden.

Die Erhebungen konnen, wie bereits ausgeführt, eine mittlere Höhe von 50 nm bis 10 µm und einen mittleren Abstand von 50 nm bis 10 µm zueinander aufweisen. Es sind jedoch auch andere Hohen und Abstande moglich, so kann jeweils unabhängig von einander die mittlere Höhe und der mittlere Abstand der Erhebungen 50 nm bis 10 µm oder 50 nm bis 4 µm betragen. Darüber hinaus konnen die Erhebungen gleichzeitig eine mittlere Höhe von 50 nm bis 4 µm und einen mittleren Abstand von 50 nm bis 4 µm aufweisen.

Die strukturierten Oberflachen der Behälter weisen - bis auf die flüssigkeitsbenetzenden Teilbereiche - besonders hohe Randwinkel auf. Dies verhindert weitgehend die Benetzung der Oberflache und fuhrt zu einer raschen Tropfenbildung. Die Tropfen können bei entsprechender Neigung der Oberflache auf den Erhebungen abrollen und auf den flüssigkeitsbenetzenden Teilbereichen adharieren Der rückstandsfreie Rückzug der Tropfenfront beim Einengen eines Tropfens auf der flussigkeitsabweisenden Oberfläche ist dem Verhalten eines abrollenden Tropfens auf der flussigkeitsabweisenden Oberfläche vergleichbar. Hier verbleiben die Rückstände auf den flussigkeitsbenetzenden Teilbereichen.

Oberflächen für die vorliegende Erfindung sind auf den flüssigkeitsabweisenden Bereichen hydrophob, wenn das unstrukturierte Material eine Oberflächenenergie weniger als 35 mN/m, bevorzugt 10-20 mN/m, aufweist und zusätzlich oleophob, wenn das unstrukturierte Material eine Oberflächenenergie von weniger als 20 mN/m aufweist. Diese Eigenschaft erweitert die Anwendungsbereiche der Behälter auch auf Gebiete, wo sie mit ölhaltigen Flüssigkeiten oder anderen organischen Flüssigkeiten oder Lösungen mit niedriger Grenzflächenspannung in Kontakt kommen (z.B. lipophileVerbindungen).

Bakterien und andere Mikroorganismen benötigen zur Adhäsion an eine Oberfläche oder zur Vermehrung an einer Oberfläche Wasser, welches an den hydrophoben Oberflächen der vorliegenden Erfindung nicht zur Verfügung steht. Die strukturierte Oberflächen der erfindungsgemäßen Behälter verhindern das Anwachsen von Bakterien und anderen Mikroorganismen an den flüssigkeitsabweisenden Bereichen; sie sind somit auch bakteriophob und/oder antimikrobiell. Die erfindungsgemäß strukturierten Behälter ermöglichen jedoch unter entsprechenden Rahmenbedingungen, wie Luftfeuchtigkeit und Temperatur ein ortsdefiniertes Wachstum von Bakterien und anderen Mikroorganismen an den benetzbaren Teilbereichen. Da der zugrundeliegende Effekt nicht auf antimikrobiellen Wirkstoffen beruht, sondern auf einem physikalischen Effekt, ist eine Beeinträchtigung des Wachstums von Bakterien und anderen Mikroorganismen auf den flüssigkeitsbenetzenden Teilbereichen durch die flüssigkeitsabweisenden Bereiche z. B. durch Ausbluten und/oder Diffusion von Wirkstoffen ausgeschlossen.

Die Charakterisierung von Oberflächen bezüglich ihrer Benetzbarkeit kann über die Messung der Oberflächenenergie erfolgen. Diese Größe ist z. B. über die Messung der Randwinkel am glatten Material von verschiedenen Flüssigkeiten zugänglich (D.K. Owens, R. C. Wendt, J. Appl. Polym. Sci. 13, 1741 (1969)) und wird in mN/m (Milli-Newton pro Meter) angegeben. Nach Owens et al. bestimmt, weisen glatte Polytetrafluorethylen-Oberflächen eine Oberflächenenergie von 19.1 mN/m auf, wobei der Randwinkel (Fortschreitwinkel) mit Wasser 120 ° beträgt. Allgemein besitzen hydrophobe Materialien mit Wasser Kontakt- oder Randwinkel (Fortschreitwinkel) von über 90°. Polypropylen weist bei einer Oberflächenenergie von 29-30 mN/m (in Abhängigkeit von der molekularen Struktur) beispielsweise gegenüber Wasser Fortschreitwinkel von etwa 105° auf.

Die Bestimmung des Randwinkels bzw. der Oberflächenenergie erfolgt zweckmäßig an glatten Oberflächen, um eine bessere Vergleichbarkeit zu gewährleisten. Die Materialeigenschaften "Hydrophobie", "Flüssigkeitsabweisend" oder "Flüssigkeitsbenetzend" werden auch durch die chemische Zusammensetzung der obersten Molekülschichten der Oberfläche mitbestimmt. Ein höherer Randwinkel bzw. niedrigere Oberflächenenergie eines Materials kann daher auch durch Beschichtungsverfahren erreicht werden.

Erfindungsgemäße Behälter weisen an den flüssigkeitsabweisenden Bereichen höhere Randwinkel als die entsprechenden glatten Materialien bzw. die flüssigkeitsbenetzenden Bereichen auf. Der makroskopisch beobachtete Randwinkel ist somit eine Oberflächeneigenschaft, welche die Materialeigenschaften plus die Oberflächenstruktur widerspiegelt.
Die flüssigkeitsbenetzenden Bereiche der erfindungsgemäßen Behälter weisen niedrigere Randwinkel als die flüssigkeitsabweisenden Bereiche auf. Dies kann durch unterschiedliche Oberflächenstrukturen, einer unterschiedlichen Grenzflächenchemie oder einer Kombination von beidem auf den jeweiligen Bereichen erreicht werden:
- die flüssigkeitsbenetzenden Teilbereiche weisen die gleiche Oberflächenchemie, jedoch unterschiedliche Erhebungen als die übrige Oberfläche auf Die Oberflächenchemie unterscheidet sich nicht über der gesamten Oberfläche. Im Idealfall besitzen die flüssigkeitsbenetzenden Teilbereiche keine Erhebungen.
- die flüssigkeitsbenetzenden und flüssigkeitsabweisenden Bereiche weisen unterschiedliche Erhebungen und Oberflächenchemie auf Dies bedeutet daß die flüssigkeitsbenetzenden Teilbereiche eine höhere Oberflächenenergie als die übrige Oberfläche, jeweils bestimmt am unstrukturierten Material, besitzen.

Zur Herstellung dieser Oberflächen bzw. der Teilbereiche können die verschiedensten Verfahren eingesetzt werden. Im folgenden sollen zwei Varianten vorgestellt werden.

### Variante A)

Die unstrukturierten Oberflächen eines vorgfertigten Behälters weisen zunächst eine Oberflächenenergie von weniger als 35 mN/m auf und werden mechanisch oder lithographisch mit Erhebungen der Höhe und Abstände der genannten Bereiche versehen. Annschließend können Teilbereiche des Behälters flüssigkeitsbenetzend beschichtet werden. Hierzu kann z.B. die strukturierte Oberfläche mit einer Maske abgedeckt werden, die die zu behandelnden Bereiche freiläßt. Die ungeschützten Bereiche können dann mit physikalischen Methoden aktiviert werden. Hier können Plasma-, Hochfrequenz- oder Mikrowellenbehandlung, elektromagnetische Strahlung wie z.B. Laser oder UV-Strahlung im Bereich 180 - 400 nm, Elektronenstrahlen oder Beflammung zum Einsatz kommen. Durch diese Methoden werden auf der Materialoberfläche thermisch oder photochemisch Radikalstellen erzeugt, die in Luft oder Sauerstoffatmosphäre schnell Hydroxy-, Hydroperoxid- oder sonstige polare und damit flüssigkeitsbenetzende funktionelle Gruppen bilden.

Dieser physikalischen Methode kann sich im zweiten Schritt noch eine chemische Modifizierung anschließen, welche die flüssigkeitsbenetzenden Eigenschaften weiter verbessert. Die funktionellen Gruppen werden dabei mit stabilen Endgruppen wie beispielsweise radikalisch polymerisierbaren Monomeren weiter umgesetzt. Ein Beispiel für solche eine chemische Modifizierung ist die radikalische Pfropfpolymerisation von Vinylmonomeren wie z.B. Acrylamid oder Acrylsäure, die durch den thermisch initiierten, radikalischen Zerfall der Hydroperoxidgruppen oberhalb von 70°C ausreichend rasch erfolgt.

In der Praxis hat sich die flüssigkeitsbenetzende Beschichtung der Teilbereiche durch elektromagnetische Strahlung bewährt.

### Variante B)

In einer weiteren Variante zur Herstellung von erfindungsgemäßen Behältern kann eine unstrukturierte Oberfläche eines Behälters mechanisch oder lithographisch mit Erhebungen versehen werden. Diese Oberfläche wird dann mit einem Material einer Oberflächenenergie von weniger als 35 mN/m beschichtet und die Beschichtung von Teilbereichen der so erhaltenen strukturierten Oberfläche mechanisch oder lithographisch wieder entfernt. Zweckmäßig wird ein unstrukturiertes Material mit einer Oberflächenenergie von mehr als 35 mN/m, bevorzugt 35-75 mN/m eingesetzt. Nach Entfernen der Beschichtung besitzen die flüssigkeitsbenetzenden Teilbereiche weitestgehend die Eigenschaften des ursprünglichen Materials.

Da insbesondere die chemischen Eigenschaften der obersten Monolagen des Materials für den Randwinkel entscheidend sind, kann gegebenenfalls eine Oberflächenmodifikation mit Verbindungen, die hydrophobe Gruppen enthalten, ausreichen. Verfahren dieser Art beinhalten die kovalente Anbindung von Monomeren oder Oligomeren an die Oberfläche durch eine chemische Reaktion, so z. B. Behandlungen mit Fluoralkylsilanen wie Dynasilan F 8262 (Sivento Chemie Rheinfelden GmbH, Rheinfelden) oder mit Ormoceren. Ormocere wie z. B. Definite Matrix (Degussa-Hüls AG) können auch als Lack verwendet werden, um die Erhebungen in den geforderten Dimensionen auf eine Oberfläche aufzubringen. Diese Lacke werden auf eine glatte Oberfläche aufgebracht und strahlenchemisch polymerisiert, wobei sich entsprechende Erhebungen ausbilden.

Weiterhin sind Verfahren, bei denen zunächst Radikalstellen auf der Oberfläche erzeugt werden, die bei An- oder Abwesenheit von Sauerstoff mit radikalisch polymerisierbaren Monomeren abreagieren, zu nennen. Die Aktivierung der Oberflächen kann mittels Plasma, UV- oder α-Strahlung, sowie speziellen Photoinitiatoren erfolgen. Nach der Aktivierung der Oberfläche, d. h. Erzeugung von freien Radikalen können die Monomeren aufpolymerisiert werden. Ein solches Verfahren generiert eine mechanisch besonders widerstandsfähige Beschichtung.

Die Beschichtung von Teilbereichen der Innenseiten eines Behälters durch Plasmapolymerisation von Fluoralkenen oder Vinylverbindungen hat sich besonders bewährt. Die Vinylverbindungen können auch ganz oder teilweise fluoriert sein.

Die flüssigkeitsabweisende Beschichung einer strukturierten oder unstrukturierten Oberfläche mit einem Material einer Oberflächenenergie von weniger als 35 mN/m kann durch Fluoralkylsilane oder z.B. durch Plasmapolymerisation von Fluoralkenen oder ganz oder teilweise fluorierten Vinylverbindungen erfolgen. Weiterhin ist der Einsatz einer HF-Hohlkathoden-Plasmaquelle mit Argon als Trägergas und C₄F₈ als Monomer bei einem Druck von ca. 0.2 mbar denkbar. Hiermit werden sogar Oberflächenenergien von unter 20 mN/m erreicht.

Außerdem können sowohl die strukturierten als auch die unstrukturierten Teilbereiche eines Behälters mit einer dünnen Schicht eines hydrophoben Polymeren überzogen werden. Dies kann in Form eines Lackes oder durch Polymerisation von entsprechenden Monomeren auf der Oberfläche des Gegenstandes erfolgen. Als polymerer Lack können Lösungen oder Dispersionen von Polymeren wie z. B. Polyvinylidenfluorid (PVDF) oder Reaktivlacke zum Einsatz kommen.

Für eine flüssigkeitsabweisende Beschichtung durch Polymerisation auf den strukturierten Oberflächen eines Behälters kommen als Monomere insbesondere Fluoralkylsilane wie Dynasilan F 8262 (Sivento Chemie Rheinfelden GmbH, Rheinfelden) in Frage.

Die Entfernung von hydrophoben oder flüssigkeitsabweisenden Beschichtungen oder der Erhebungen von Teilbereichen der strukturierten Teilbereichen kann wiederum mechanisch, thermisch, photoablativ oder lithographisch erfolgen. Mechanisch ist dies durch Mikrozerspanung z.B. durch Bohren oder Fräsen möglich. Die Werkzeuge können z.B. durch eine CNC-Aparatur sehr genau positioniert werden. Eine lithographische oder thermische Methode ist z.B. die Bestrahlung mit einem Laser in einem Wellenlängenbereich, in dem das Beschichtungsmaterial Energie absorbiert. Dies ist beispielsweise für Polymethylmethacrylat (PMMA) bei 193 nm der Fall, weshalb ein ArF*-Eximerlaser für die Ablation der Beschichtung hier besonders geeignet ist.

Eine besonders niedrige Oberflächenenergie ist insbesondere dann notwendig, wenn nicht nur hydrophobes, sondern auch oleophobes Verhalten gefordert ist. Dies ist insbesondere bei öligen Flüssigkeiten der Fall. Diese führen nämlich bei nicht-oleophoben Oberflächen zu einer Benetzung, was die genannten Eigenschaften nachhaltig negativ beeinflußt. Für solche Anwendungen sollte die Oberflächenenergie des nicht strukturierten Materials unterhalb von 20 m/Nm, vorzugsweise bei 5 bis 20 mN/m liegen.

Wie bereits erwähnt, weisen glatte Polytetrafluorethylen-Oberflächen eine Oberflächenenergie von 19.1 mN/m auf. Mit Hexadecan als Flüssigkeit mit niedriger Oberflächenspannung beträgt der Randwinkel (Fortschreitwinkel) 49°. Oberflächen, die mit Fluroalkylsilanen wie z.B. Dynasilan F 8262 (Fa. Sivento Chemie, Rheinfelden) modifiziert wurden, weisen Oberflächenenergieen von unter 10 mN/m auf. Hier werden mit Hexadecan Fortschreitwinkel von bis zu 80° gemessen. Bei einer Oberflächenenergie von 29-30 mN/m wird der Randwinkel von Polypropylen gegenüber Hexadecan auf unter 10° geschätzt (experimentell nur schwer zu ermitteln).

Die Oberflächeneigenschaften der flüssigkeitsabweisenden Bereiche der erfindungsgemäßen Behälter sind von der Höhe, der Form und dem Abstand der Erhebungen abhängig.

Das Verhältnis von Höhe zu Breite der Erhebungen, das Aspektverhältnis, ist ebenfalls von Bedeutung. Die Erhebungen weisen bevorzugt ein Aspektverhältnis von 0.5 bis 20, bevorzugt von 1 bis 10 und besonders bevorzugt von 1 bis 3.0 auf.

Um die niedrigen Randwinkel der flüssigkeitsabweisenden Bereiche zu erreichen, sind neben den strukturellen auch die chemischen Eigenschaften des Materials von Bedeutung. Hier ist insbesondere die chemische Zusammensetzung der obersten Monolage des Materials entscheidend. Die flüssigkeitsabweisenden Bereiche der erfindungsgemäßen Behälter werden daher zweckmäßig aus Materialien hergestellt, die bereits vor der Strukturierung ihrer Oberfläche hydrophobes Verhalten aufweisen. Diese Materialien beeinhalten insbesondere Poly(tetrafluorethylen), Poly(trifluoethylen), Poly(vinylidenfluorid), Poly(chlortrifluorethylen), Poly(hexafluorpropylen), Poly(perfluorpropylenoxid), Poly(2,2,3,3-tetrafluoroxetan), Poly(2,2-bis(trifluormethyl)-4,5-difluor-1,3-dioxol), Poly(fluoralkylacrylat), Poly(fluoralkylmethacrylat), Poly(vinylperfluoralkylether) oder andere Polymere aus Perfluoralkoxyverbindungen, Poly(ethylen), Poly(propylen), Poly(isobuten), Poly(isopren), Poly(4-methyl-1-penten), Poly(vinylalkanoate) und Poly(vinylmethylether) als Homo- oder Copolymere. Diese Materialien sind auch als Mischungsbestandteil eines Polymerblends einsetzbar. Zweckmäßig besteht der Behälter vollständig aus diesen Materialien.

Weiterhin sind Mischungen von Polymeren mit Additiven denkbar, die sich beim Formungsprozeß so ausrichten, daß an der Oberfläche hydrophobe Gruppen vorherrschen. Als Additiv kommen fluorierte Wachse, z. B. die Hostaflone der Hoechst AG in Frage.
Die Strukturierung eines Teilbereichs kann auch nach der hydrophoben Beschichtung eines Werkstoffs durchgeführt werden. Ebenso kann die chemische Modifikation der Oberfläche durch eine flussigkeitsabweisende Beschichtung nach der Formgebung durchgeführt werden.

Die Formgebung oder Strukturierung eines Teilbereichs kann durch Prägen/Wälzen oder gleichzeitig beim makroskopischen Formen des Behälters wie z. B. Gießen, Spritzgießen oder andere formgebende Verfahren erfolgen. Hierzu sind entsprechende Negativformen der erwunschten Struktur erforderlich. Die Herstellung von erfindungsgemäßen Behältern mit einem Fassungsvermogen von 0,1 bis 1 ml kann sehr einfach durch Spritzguß erfolgen.

Negativformen lassen sich industriell z. B. mittels der Liga-Technik (R. Wechsung in Mikroelektronik, 9, (1995) S 34 ff) herstellen. Hier werden zunächst eine oder mehrere Masken durch Elektronenstrahllithographie nach den Dimensionen der gewünschten Erhebungen hergestellt. Diese Masken dienen zur Belichtung einer Photoresistschicht durch Rontgentiefenlithographie, wodurch eine Positivform erhalten wird. Die letzte Maskenbelichtung kann auch dem Einbringen der flachen, später flüssigkeitsbenetzenden Teilbereiche dienen Die Zwischenraume im Photoresist werden anschließend durch galvanische Abscheidung eines Metalls aufgefullt Die so erhaltene Metallstruktur stellt eine Negativform für die gewunschte Struktur dar

Die Belichtung einer Photoresistschicht kann auch durch Laserholographie erfolgen. Belichtet man dabei den Photoresist orthogonal mit Welleninterferenzmustern, so errzeugt man eine sogenannte Mottenaugenstruktur, wodurch eine Positivform erhalten wird. Eine weitere Maskenbelichtung kann wiederum dem Einbringen der flachen, später flüssigkeitsbenetzenden Teilbereiche dienen Die Zwischenräume im Photoresist werden anschließend durch galvanische Abscheidung eines Metalls aufgefüllt. Die so erhaltene Metallstruktur stellt eine Negativform für die gewunschte Struktur dar

Sind in die so erhaltene metallene Negativform noch keine flachen, später flüssigkeitsbenetzenden Teilbereiche eingebracht worden, läßt sich die Negativform mechanisch nachbearbeiten. Hier kann durch Mikrozerspanung die Struktur an gewünschten Stellen mechanisch abgetragen werden.

In einer anderen Ausführungsform der vorliegenden Erfindung sind die Erhebungen auf einer etwas groberen Überstruktur angeordnet.

Die Erhebungen weisen die oben ausgeführten Dimensionen auf und können auf einer Überstruktur mit einer mittleren Höhe von 10 nm bis 1 mm und einem mittleren Abstand von 10 nm bis 1 mm aufgebracht werden.

Die Erhebungen und die Überstruktur können gleichzeitig oder nacheinander mechanisch eingeprägt, durch lithographische Verfahren oder durch formgebende Verarbeitung, hier insbesondere durch entsprechende Negativformen mittels Spritzguß aufgebracht werden.

Die Erhebungen und die Überstruktur können eine periodische Anordnung besitzen. Es sind jedoch auch stochastische Verteilungen der Dimensionen der Überstruktur und der Erhebungen, gleichzeitig oder unabhängig voneinander, zulässig. Bei stochastischen Strukturen wird die Rauhigkeit meist über Rauheitsparameter definiert. Als Kenngrößen für die Oberflächen seien der arithmetische Mittenrauhwert Ra, die gemittelte Rauhtiefe Rz und die maximale Rauhtiefe Rmax angegeben. Strukturierte Teilbereiche der erfindungsgemäßen Behälter können Werte für Ra von 0,2 bis 40 µm, Rz 0,1 bis 40 µm und Rmax 0,1 bis 40 µm aufweisen.

Die Formgebung bzw. die Strukturierung der Behälter-Innenflächen erfolgt bei Oberflächen mit Überstruktur wie bei Oberflächen mit nur einer Mikrostruktur, zweckmäßig in einem Arbeitsgang. Eine nachträgliche Hydrophobierung bzw. chemische Modifikation einer bereits erzeugten "doppelt" strukturierten Oberfläche ist selbstverständlich ebenso möglich.

Erfindungsgemäße Behälter sind ab einer Strukturierung kleiner 400 nm transparent und eignen sich daher für alle Anwendungen, bei denen es auf eine hohe Transmission oder gute optische Eigenschaften ankommt. Hier ist besonders die Herstellung oder Beschichtung von Behältern z. B. in der optischen Analytik zu nennen.

Erfindungsgemäße Behälter eignen sich daher hervorragend zur Aufbewahrung von biologischen oder pharmazeutischen Erzeugnissen, bei denen Flüssigkeiten auf kleine Bereiche aufgeteilt werden müssen, sich die Flüssigkeit auf den flüssigkeitsbenetzenden Bereiche durch leichtes Erschüttern oder durch leichte Neigung des Behälters sammelt.

Mögliche Verwendungszwecke der Behälter: Hochwertige Peptide und andere biologische Substanzen werden üblicherweise in sogenannten "Eppendorf"-Hütchen aufbewahrt. Diese Aufbewahrungsbehälter sind üblicherweise aus Polyethylen hergestellt und besitzen ein Fassungsvermögen von einigen 100 µL bis einigen mL. Durch ein Verschlußsystem können diese Behälter abgedichtet und gegebenenfalls tiefgefroren werden. Aufgrund der Lagerbedingungen lagert sich die flüssige Substanz in der Regel statistisch verteilt an den Oberflächen an. Für eine vollständige Probenentnahme ist aber die Ansammlung der Substanz an einem Punkt wünschenswert. Hier kann die beschriebene Erfindung Abhilfe schaffen. Durch eine Mikrostrukturierung, in der vorgenannten Form der inneren Flächen, ist es möglich, daß sich die gesamte Substanz an einem Punkt sammelt und zur vollständigen Entnahme bereitsteht.

Die Verwendung der vorgenannten Erfindung ist aber auch im Umweltschutz bei der Verwendung toxischer Substanzen denkbar. Des weiteren sind Ampullen und Aufbewahrungsbehälter für Medikamente mit einer parentaralen Darreichungsform denkbar.

Die folgenden Beispiele sollen die Erfindung näher erläutern, ohne ihren Schutzumfang zu begrenzen.

### Beispiel 1:

Medikamente die intravenös oder subcutan verabreicht werden, werden in Ampullen oder kleinen Container aufbewahrt. Die gebrauchsfertige Lösung übersteigt hier selten 1mL. An den Oberflächen dieser Behältnisse lagern sich durch Erschütterungen immer wieder kleine Tropfen an. Bei der Entnahme der Flüssigkeit mit einer Nadel bleiben diese Tropfen häufig an den Wänden zurück und reduzieren so die verfügbare Lösung um bis zu 10%. Hierdurch entsteht bei Medikamenten eine relative hohe Dosierungenauigkeit und bei sehr wertvollen Lösungen mitunter ein hoher wirtschaftlicher Schaden.

Diese Verluste lassen sich vermeiden, indem Aufbewahrungsbehälter innen mit einer mikrostrukturierten hydrophoben Oberfläche ausgestattet werden. Mit Hilfe der Ligatechnik werden zwei Halbschalen aus Polyethylen abgeformt. Die der Flüssigkeit zugewandten Oberflächen weisen Erhebungen mit einer mittleren Höhe von 1-5 µm und einem Abstand von 1-3 µm auf. Die beiden Halbschalen sind so geformt, dass der Boden der resultierenden Ampulle keine Erhebungen aufweist, d. h. als unstrukturierter Teilbereich ausgeführt ist. Vor dem zusammenschweißen beider Halbzeuge werden die Flächen mit Dynasylan® F8262 hydrophobiert. Hierfür werden die Behälter für 5 Minuten in eine gebrauchsfertige Lösung Dynasylan® F8262 getaucht. Anschließend werden die Behälter so aufgestellt, dass die überschüssige Lösung ablaufen kann. In den so hergestellten Behältern perlt die Flüssigkeit immer von den Rändern ab und zieht sich an dem Ort mit der niedrigsten potentiellen Energie, d. h. an dem unstrukturierten Teilbereich am Boden der Ampulle zusammen.

### Beispiel 2:

Die der Flüssigkeit zugewandten Oberflächen, handelsübliche Ampullen oder Aufbewahrungsbehälter, werden mit einer Ormocerlösung (z.B. Definite Matrix ®) benetzt. Diese Lösung wird mit einem Photoinitiatorsystem versetzt der durch Bestrahlung mit Licht der Wellenlänge 308nm die Vernetzung initiiert. Als Initiatorsystem eignet sich 2,2' Dimethoxy-2-phenyl-acetophenon in einer Konzentration von 0,5-1%. Um eine ausreichende vernetzte Schicht zu erhalten, reicht eine Bestrahlungszeit von 30s. Die Beschichtungen mit den Ormocerlack erfolgt in einer Rollerapparatur, so dass der Boden der Ampullen oder Behälter unbeschichtet bleibt und daher nach dem Aushärten des Lackes keine Erhebungen aufweist. Die beschichteten Teilbereiche der Behälter weisen Erhebungen mit einer mittleren Höhe von 1-5 µm und einen mittleren Abstand von 1-3 µm auf Die nicht benötigte Ormocerlösung wird anschließend heraus gespült. Im nächsten Schritt müssen nun die Oberflächen hydrophobiert werden. Hierfür werden die Behälter für 5 Minuten in eine gebrauchsfertige Lösung Dynasylan® F8262 getaucht. Anschließend werden die Behälter so aufgestellt, dass die überschüssige Lösung ablaufen kann. In den so hergestellten Behältern perlt die Flüssigkeit immer von den Rändern ab und zieht sich an dem Ort mit der niedrigsten potentiellen Energie, d. h. am unstrukturierten Teilbereich am Boden des Behälters zusammen.

### Beispiel 3:

Die Beschichtung mit einem Ormocerlack erfolgt wie in Beispiel 2, nur wird der Lack im gesamten Behälter aufgebracht, d. h. die Erhebungen befinden sich auf der gesamten inneren Oberfläche. Die Hydrophobierung mit Dynasylan® F8262 erfolgt dagegen in einer Rollerapparatur, so dass der Boden des Gefäßes nicht hydrophobiert wird.

In den so hergestellten Behältern perlt die Flüssigkeit immer von den Rändern ab und zieht sich an dem Ort mit der niedrigsten potentiellen Energie, d. h. an den unstrukturierten Teilbereich am Boden der Ampulle bzw. am Boden des Behälters zusammen.

## Patentansprüche

1. Behälter mit flüssigkeitsabweisenden und flüssigkeitsbenetzenden Teilbereichen der inneren Oberfläche, wobei
a) die flüssigkeitsabweisenden Teilbereiche durch Erhebungen mit einer mittleren Höhe von 50 nm bis 10 µm und einem mittleren Abstand von 50 nm bis 10 µm strukturiert sind und eine Oberflächenenergie des unstrukturierten Materials von weniger als 35 mN/m aufweisen und
b) die flüssigkeitsbenetzenden Teilbereiche keine Erhebungen aufweisen.

2. Behälter nach Anspruch 1, wobei
die flüssigkeitsbenetzenden Teilbereiche eine höhere Oberflächenenergie als die übrige Oberfläche, jeweils bestimmt am unstrukturierten Material, aufweisen.

3. Behälter nach einem der Ansprüche 1 oder 2, wobei
die Erhebungen eine mittlere Höhe von 50 nm bis 4 µm aufweisen.

4. Behälter nach einem der Ansprüche 1 oder 2, wobei
der mittlere Abstand der Erhebungen 50 nm bis 4 µm beträgt.

5. Behälter nach einem der Ansprüche 1 oder 2, wobei
die Erhebungen eine mittlere Höhe von 50 nm bis 4 µm und einen mittleren Abstand von 50 nm bis 4 µm aufweisen.

6. Behälter nach einem der Ansprüche 1 bis 5, wobei
die Erhebungen ein Aspektverhältnis von 1 bis 10 aufweisen.

7. Behälter nach einem der Ansprüche 1 bis 6, wobei
die Erhebungen auf einer Überstruktur mit einer mittleren Höhe von 10 µm bis 1 mm und einem mittleren Abstand von 10 µm bis 1 mm aufgebracht sind.

8. Behälter nach einem der Ansprüche 1 bis 7, wobei.
das unstrukturierte Material Poly(tetrafluorethylen), Poly(trifluoethylen), Poly(vinylidenfluorid), Poly(chlortrifluorethylen), Poly(hexafluorpropylen), Poly(perfluorpropylenoxid), Poly(2,2,3,3-tetrafluoroxetan), Poly(2,2-bis(trifluormethyl)-4,5-difluor-1,3-dioxol), Poly(fluoralkylacrylat), Poly(fluoralkylmethacrylat), Poly(vinylperfluoralkylether) oder andere Polymere aus Perfluoralkoxyverbindungen, Poly(ethylen), Poly(propylen), Poly(isobuten), Poly(isopren), Poly(4-methyl-1-penten), Poly(vinylalkanoate) und Poly(vinytmethylether) als Homo- oder Copolymer beinhaltet.

## Claims

1. A container whose inner surface has liquid-repellent and wettable subregions,
where
a) the liquid-repellent subregions have structuring by elevations with an average height of from 50 nm to 10 µm and with an average separation of from 50 nm to 10 µm, and have a surface energy of less than 35 mN/m for the unstructured material, and
b) the wettable subregions have no elevations.

2. A container according to claim 1,
where
determined in each case on the unstructured material, the surface energy of the wettable subregions is higher than that of the remainder of the surface.

3. A container according to either one of claims 1 and 2,
where
the elevations have an average height of from 50 nm to 4 µm.

4. A container according to either one of claims 1 and 2,
where
the average separation of the elevations is from 50 nm to 4 µm.

5. A container according to either one of claims 1 and 2,
where
the elevations have an average height of from 50 nm to 4 µm and an average separation of from 50 nm to 4 µm.

6. A container according to any one of claims 1 to 5,
where
the elevations have an aspect ratio of from 1 to 10.

7. A container according to any one of claims 1 to 6,
where
the elevations have been applied to a primary structure with an average height of from 10 µm to 1 mm and with an average separation of from 10 µm to 1 mm.

8. A container according to any one of claims 1 to 7,
where
the unstructured material comprises poly(tetrafluoroethylene), poly(trifluoroethylene), poly(vinylidene fluoride), poly(chlorotrifluoroethylene), poly(hexafluoropropylene), poly(perfluoropropylene oxide), poly(2,2,3,3-tetrafluorooxetane), poly(2,2-bis(trifluoromethyl)-4,5-difluoro-1,3-dioxole), poly(fluoroalkyl acrylate), poly(fluoroalkyl methacrylate), poly(vinyl perfluoroalkyl ether), or another polymer made from perfluoroalkoxy compounds, poly(ethylene), poly(propylene), poly(isobutene), poly(isoprene), poly(4-methyl-1-pentene), poly(vinyl alkanoates), or poly(vinyl methyl ether), in the form of homo- or copolymer.

## Revendications

1. Contenant présentant sur sa surface intérieure des parties déperlantes et des parties mouillables,
dans lequel :
a) les parties déperlantes sont structurées au moyen d'élévations d'une hauteur moyenne de 50 nm à 10 µm et d'un écartement moyen de 50 nm à 10 µm et présentent une énergie superficielle de la matière non structurée inférieure à 35 mN/m, et
b) les parties mouillables ne présentent pas d'élévations.

2. Contenant selon la revendication 1,
dans lequel
les parties mouillables présentent une énergie superficielle supérieure à celle du reste de la surface, déterminée à chaque fois sur la matière non structurée.

3. Contenant selon l'une ou l'autre des revendications 1 ou 2,
dans lequel
les élévations ont une hauteur moyenne de 50 nm à 4 µm.

4. Contenant selon l'une ou l'autre des revendications 1 ou 2,
dans lequel
l'écartement moyen des élévations est de 50 nm à 4 µm.

5. Contenant selon l'une ou l'autre des revendications 1 ou 2,
dans lequel
les élévations ont une hauteur moyenne de 50 nm à 4 µm et un écartement moyen de 50 nm à 4 µm.

6. Contenant selon l'une quelconque des revendications 1 à 5,
dans lequel
les élévations présentent un rapport d'aspect de 1 à 10.

7. Contenant selon l'une quelconque des revendications 1 à 6,
dans lequel
les élévations sont appliqués sur une superstructure avec une hauteur moyenne de 10 µm à 1 mm et avec un écartement moyen de 10 µm à 1 mm.

8. Contenant selon l'une quelconque des revendications 1 à 7,
dans lequel
la matière non structurée comprend le poly(tétrafluoréthylène), le poly(trifluoréthylène), le poly(fluorure de vinylidène), le poly(chlorotrifluoréthylène), le poly(hexafluoropropylène), le poly(oxyde de perfluoropropyle), le poly(2,2,3,3-tétrafluoroxétane), le poly(2,2,-bis(trifluorométhyl)-4,5-difluoro-1,3-dioxol), le poly(acrylate de fluoroalkyle), le poly(méthacrylate de fluoroalkyle), le poly(vinylperfluoralkyléther) ou d'autres polymères de composés perfluoroalcoxy, le poly(éthylène), le poly(propylène), le poly(isobutène), le poly(isoprène), le poly(4-méthyl-1-pentène), le poly(alcanoate de vinyle) et le poly(vinylméthyléther) sous forme d'homo- ou co-polymères.
